(19) Europäisches Patentamt
European Patent Office
Office européen des brevets

(11) Numéro de publication: **0 269 506 B1**

(12) **FASCICULE DE BREVET EUROPEEN**

(45) Date de publication du fascicule du brevet: **19.09.90**

(51) Int. Cl.[5]: **C01B 21/097**

(21) Numéro de dépôt: **87402526.5**

(22) Date de dépôt: **09.11.87**

(54) **Procédé d'obtention de N(dichlorophosphoryl)trichlorophosphazène à partir de pentachlorure de phosphore et de chlorure d'ammonium.**

(30) Priorité: **12.11.86 FR 8615684**

(43) Date de publication de la demande: **01.06.88 Bulletin 88/22**

(45) Mention de la délivrance du brevet: **19.09.90 Bulletin 90/38**

(84) Etats contractants désignés: **AT BE CH DE ES FR GB GR IT LI LU NL SE**

(56) Documents cités:
**US-A- 3 231 327**

**CHEMISCHE BERICHTE, vol. 94, 1961, pages 1591-1594, Weinheim, DE; M. BECKE-GOEHRING et al.: "Ein neues Phosphornitrid-chlorid, P3NCl12"**
**CHEMICAL ABSTRACTS, vol. 92, no. 8, 25 février 1980, page 694, résumé no. 68851h, Columbus, Ohio, US; V.A. GILYAROV et al.: "Preparation of (dichlorophosphinyl)phosphorimidic trichloride", & IZV. AKAD. NAUK SSSR, SER. KHIM. 1979, (11), 2625-6**
**JOURNAL OF THE CHEMICAL SOCIETY (A), 1970, pages 3025-3029, Letchworth, GB; J. EMSLEY et al.: "Elucidation of the reaction of phosphorus pentachloride and ammonium chloride by**

(73) Titulaire: **ATOCHEM, 4 & 8, Cours Michelet La Défense 10, F-92800 Puteaux(FR)**

(72) Inventeur: **Passimourt, Nadine, 5 Rue des Alliés, F-64000 Pau(FR)**
Inventeur: **Potin, Philippe, 9 Rue des Paquerettes, F-64140 Billere(FR)**

(74) Mandataire: **Rochet, Michel et al, ATOCHEM Département Propriété Industrielle La Défense 10 4 & 8 Cours Michelet, F-92800 Puteaux(FR)**

(56) Documents cités: (suite)
**phosphorus-31 nuclear magnetic resonance spectroscopy"**

EP 0 269 506 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

On a décrit (demande de brevet européen publiée sous le numéro 0 026 685) la préparation de polychlorophosphazènes linéaires de formule
$Cl_2(O)P[NPCl_2]_n\ Cl$
à partir de N(dichlorophosphoryl) trichlorophosphazène de formule

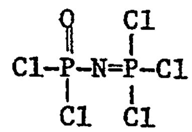

Ce phosphazène de formule I peut être obtenu par décomposition de $P_3NCl_{12}$ (formule développée $[Cl_3P{=}NPCl_3]^+PCl_6^-$) sous l'action de $P_2O_5$, $P_3NCl_{12}$ pouvant être obtenu à partir de pentachlorure de phosphore et de chlorure d'ammonium (US-A 3 231 327).

Cette méthode nécessite la mise en oeuvre de $P_2O_5$, produit de manipulation délicate du fait notamment de l'état solide de ce produit et de son hydrophilie et la décomposition de $P_3NCl_{12}$ s'accompagne de la production d'une quantité importante de $POCl_3$ (7 moles pour 3 moles de produit de formule I).

On a proposé (M. BECKE - GOERING et W. LEHR. Chem. Ber. <u>94</u> 1591-4 1961) de décomposer $P_3NCl_{12}$ au moyen de $SO_2$. Selon ces auteurs $P_3NCl_{12}$ est séparé du milieu réactionnel et mis en solution dans du $SO_2$ liquide. Cette technique requiert la mise en oeuvre d'une quantité importante de $SO_2$ et impose la séparation préalable de $P_3NCl_{12}$, opération devant nécessairement se faire à l'abri de l'humidité atmosphérique. J. EMSLEY et P.B. UDY J. Chem. Soc. (A) 3025-9 (1970) proposent d'effectuer la synthèse de $P_3NCl_{12}$ dans le tétrachloroéthane symétrique et d'injecter du $SO_2$ dans le milieu réactionnel. Cette technique conduit, lors de l'étape de préparation de $P_3NCl_{12}$, à la formation simultanée d'homologues supérieurs ($P_3N_2Cl_9$ et $P_4N_2Cl_{14}$) ainsi que d'oligomères cycliques $(N{=}PCl_2)_n$ avec n compris entre 3 et 7.

Le traitement d'un tel milieu réactionnel au moyen de $SO_2$ provoque une réaction fortement exothermique élevant la température du milieu à la température d'ébullition du solvant. Le mélange réactionnel se colore en jaune intense et, après élimination du solvant, le produit brut est jaune orangé. L'expérience montre que la distillation ne permet pas d'obtenir un produit final incolore.

L'invention se propose de fournir un procédé permettant de préparer intermédiairement du $P_3NCl_{12}$ ne renfermant qu'une très faible proportion d'homologues supérieurs ou d'oligomères cycliques.

Elle fournit également un procédé conduisant à du phosphazène de formule I quasi incolore au niveau du produit brut et totalement incolore après distillation.

L'invention fournit encore un procédé de préparation d'un phosphazène de formule I conduisant à des polycondensats de masse moléculaire supérieure à $5.10^5$.

D'autres avantages de l'invention apparaîtront à la lecture de ce qui suit.

Le procédé conforme à l'invention consiste à mettre en contact le pentachlorure de phosphore et le chlorure d'ammonium en présence de $POCl_3$ puis à traiter au moyen de $SO_2$ le milieu réactionnel contenant $P_3NCl_{12}$ et maintenu à une température au plus égale à environ 30°C et à séparer le phosphazène de formule I.

Le rapport molaire

$$\frac{PCl_5}{NH_4Cl}$$

correspondant à la stoechiométrie de la réaction de ces produits est de 3/1. Il peut être avantageux d'utiliser un excès pouvant atteindre 20% du chlorure d'ammonium. On ne sortirait pas du cadre de l'invention en formant in situ le pentachlorure de phosphore à partir de $PCl_3$ et $Cl_2$.

L'oxychlorure de phosphore ($POCl_3$) est utilisé comme solvant d'une partie au moins des réactifs. D'une manière générale, la quantité pondérale de $POCl_3$ mise en oeuvre est comprise entre 0,5 et 5 fois la quantité pondérale de $PCl_5$ + $NH_4Cl$, et plus avantageusement entre 0,8 et 2 fois.

Il faut considérer que $POCl_3$ est tout particulièrement recommandé pour l'obtention d'un phosphazène de formule I ne renfermant qu'une très faible proportion d'homologues supérieurs ou d'oligomères cycliques. Il va sans dire qu'on ne sortirait pas du cadre de l'invention en associant à $POCl_3$ d'autres solvants connus pour ce type de réaction tels que le tétrachloroéthane symétrique ou le chlorobenzène.

Le dioxyde de soufre est utilisé pour la décomposition de $P_3NCl_{12}$ en $P_2NOCl_5$. De ce fait, la quantité de $SO_2$ mise en oeuvre doit être telle que le rapport molaire

$$\frac{SO_2}{PCl_5\ \text{engagé}}$$

soit d'au moins 2/3. On peut utiliser un rapport supérieur mais il n'apparaît pas avantageux de dépasser un rapport molaire de 1,5/1.

La réaction de $PCl_5$ et $NH_4Cl$ s'effectue généralement en atmosphère inerte et à une température supérieure à 70°C. On opère avantageusement sous pression atmosphérique et à température de reflux de $POCl_3$, le milieu réactionnel étant fortement agité. La durée de la réaction est de l'ordre de quelques heures, par exemple de 1 à 8 heures. A la fin de la réaction (marquée notamment par la cessation de l'émission d'HCl), il convient de ramener la température du milieu réactionnel à une température au plus égale à environ 30°C.

Il convient de considérer la valeur 30°C comme une valeur maximum recommandée pour obtenir des produits incolores mais compte tenu des modalités pratiques d'appréciation de la coloration (examen

optique), cette valeur peut être légèrement dépassée sans sortir du cadre de l'invention.

Dans le milieu réactionnel ainsi maintenu à environ 30°C ou à une température inférieure, on introduit le $SO_2$. Cette introduction s'effectue à une vitesse telle que la température du milieu ne s'élève pas au-dessus de 30°C. D'une manière plus générale, le traitement au moyen de $SO_2$ peut s'effectuer à toute température comprise entre la température de fusion du milieu réactionnel et au plus 30°C.

Le $SO_2$ est avantageusement introduit progressivement, pendant une durée pouvant aller de 0,5 à 10 heures, et de préférence d'une à 6 heures, ces valeurs ne pouvant être considérées que comme des ordres de grandeur.

Les réactions de formation et de décomposition de $P_3NCl_{12}$ et les excès éventuels de réactifs mis en oeuvre entraînent la présence de HCl et de $SO_2$, qui peuvent être éliminés par simple barbotage d'azote, ou sous pression réduite que de $POCl_3$ et $SOCl_2$ qui sont éliminés par évaporation sous pression réduite.

Le procédé conforme à l'invention conduit à du N(dichlorophosphoryl) trichlorophosphazène de formule 1 avec un rendement supérieur à 80%. Le traitement au moyen de $SO_2$ à une température inférieure 30°C donne un $P_2NOCl_5$ brut quasi incolore et un $P_2NOCl_5$ distillé rigoureusement incolore, une coloration jaune de plus en plus intense apparaissant lorsque la température du traitement au $SO_2$ atteint et dépasse 30°C.

Le phosphazène de formule I obtenu conformément à ce procédé peut conduire, par polycondensation effectuée par exemple dans les conditions décrites dans la demande de brevet européen 0 026 685 à des polychlorophosphazènes et à leurs produits de substitution, notamment des polyorganophosphazènes tels que des polyalcoxyphosphazènes, des polyaryloxyphosphazènes ou des polyaminophosphazènes.

Les exemples suivants illustrent l'invention.

EXEMPLE 1 :

On introduit successivement dans un réacteur
. 2400 g (11,5 moles) de $PCl_5$
. 230 g (4,3 moles) de $NH_4Cl$
. 1500 ml de $POCl_3$

L'ensemble est porté à la température de reflux du solvant et maintenu sous agitation à cette température pendant 2 heures. Le mélange réactionnel se présente sous forme d'une suspension de $P_3NCl_{12}$.

On refroidit le mélange réactionnel entre 10 et 20°C et injecte dans le milieu 600 g (9,36 moles) de $SO_2$ en 250 mn en maintenant la température audessous de 20°C.

Après réaction, les gaz résiduels (HCl et $SO_2$) sont éliminés sous courant d'azote, $POCl_3$ et $SOCl_2$ étant éliminés sous pression réduite à 133 Pa (1 torr) (température 20°C).

Le mélange réactionnel, parfaitement incolore, contient 1017 g de $P_2NOCl_5$ brut (rendement 97% sur $PCl_5$).

Le $P_2NOCl_5$ brut est distillé dans les conditions suivantes :

- température du fluide de chauffe : 130°C
- température du bouilleur : 115°C
- température de tête : 87°C
- pression (absolue) : 66,6 Pa (0,5 torr)

On opère avec un taux de reflux de 5 pendant les 5 premiers % de distillation et un taux de reflux de 1 jusqu'à l'arrêt des vapeurs de $P_2NOCl_5$. Le total du distillat recueilli représente 85% de la masse introduite dans le bouilleur (rendement 82,6% sur $PCl_5$ de départ).

On note que la première fraction de 5% présente une très légère teinte jaune, les 80% suivants étant rigoureusement incolores et restant incolores après 2 semaines de stockage sous azote.

EXEMPLE 2 :

On renouvelle l'essai de l'exemple 1 en introduisant 1000 g de $SO_2$ en 300 mn dans un mélange réactionnel maintenu entre 10 et 20°C. Toutes autres conditions étant égales par ailleurs, on recueille 997 g de $P_2NOCl_5$ brut incolore et après distillation 810 g de $P_2NOCl_5$ rigoureusement incolore et le restant après 2 semaines de stockage sous azote.

EXEMPLE 3 :

On renouvelle l'essai de l'exemple 1 en introduisant le $SO_2$ en 300 mn dans un milieu réactionnel maintenu à 30°C (au lieu de 10-20°C).

On recueille 992 g de $P_2NOCl_5$ brut très légèrement coloré en jaune.

Après distillation dans les conditions de l'exemple 1, on recueille du $P_2NOCl_5$ totalement incolore après un étêtage de 20%.

EXEMPLE COMPARATIF 1 :

On renouvelle l'essai de l'exemple 1 en introduisant le $SO_2$ en 165 mn dans le milieu à la température de reflux du $POCl_3$.

Le milieu réactionnel est fortement teinté en jaune et on recueille 1020 g de $P_2NOCl_5$ brut fortement coloré en jaune-orangé.

On distille le $P_2NOCl_5$ brut dans les conditions de l'exemple 1. On obtient une coloration jaune vif des 6 premiers % du distillat. Cette coloration ne disparait qu'après distillation de 35% de la charge. On poursuit la distillation jusqu'à disparition des vapeurs de $P_2NOCl_5$. Le distillat compris entre 35 et 85% présente une légère teinte grise qui devient intense après 48 heures de stockage sous azote.

EXEMPLE COMPARATIF 2 :

On renouvelle l'essai comparatif 1 en introduisant le $SO_2$ en 300 mn. On obtient 987 g de $P_2NOCl_5$ brut fortement coloré en jaune-orangé. Le distillat compris entre 20 et 85% présente la teinte grise de l'exemple comparatif 1.

EXEMPLE 4 :

Le $P_2NOCl_5$ provenant de la fraction du distillat de l'exemple 1 comprise entre 5 et 85% est polycondensé dans les conditions suivantes :

- On introduit dans un réacteur sous atmosphère d'azote 165 g de $P_2NOCl_5$ et 137 g de trichlorodiphényle et les chauffe sous agitation à 280°C. $POCl_3$ s'élimine pendant une période de 150 mn environ. On maintient le polycondensat sous agitation et prélève un échantillon au bout de 26 heures (A) et un autre au bout de 30 heures (B).
- On dilue la solution de polychlorophosphazènes dans le trichlorodiphényle obtenue ci-avant dans du benzène de manière à obtenir une solution contenant 10% en poids de polychlorophosphazène.

On prépare séparément une solution de phénol (35,65 g) dans le diethylèneglycol diméthylether (150 g). Cette solution est déshydratée jusqu'à un taux d'humidité inférieur à 10 ppm. On introduit dans cette solution du sodium (8,33 g) et on chauffe l'ensemble sous agitation pendant 2 heures à 120°C. Lorsque le sodium a disparu on introduit en 2 heures environ 200 g de la solution benzénique de polychlorophosphazène. L'ensemble est laissé à réagir pendant 48 heures à 120°C. Le mélange réactionnel est neutralisé par addition d'HCl. Les solvants sont évaporés sous vide. Le reliquat est repris en solution dans le minimum de tétrahydrofuranne, filtré et précipité dans le méthanol. Le précipité est essoré, lavé au méthanol et séché à 80°C sous pression réduite à 133 Pa (1 torr).

Les viscosités intrinsèques des polydiphénoxyphosphazènes obtenus sont les suivantes :

- à partir de l'échantillon A : $[\eta]$ = 75 ml/g soit une masse moléculaire en poids de 803 000
- à partir de l'échantillon B : $[\eta]$ = 79,4 ml/g soit une masse moléculaire en poids de 870 000

(mesure effectuée à 30°C dans le tétrahydrofuranne).

## Revendications

1. Procédé d'obtention de N(dichlorophosphoryl) trichlorophosphazène ($P_2NOCl_5$) par mise en contact de pentachlorure de phosphore et de chlorure d'ammonium en présence de $POCl_3$, caractérisé en ce qu'il consiste à traiter le milieu résultant de cette réaction et contenant $P_3NCl_{12}$ au moyen de $SO_2$, ledit milieu étant maintenu à une température au plus égale à environ 30°C, et à séparer le phosphazène $P_2$ $NOCl_5$.

2. Procédé selon la revendication 1, caractérisé en ce que le rapport molaire $PCl_5/NH_4Cl$ est de 3/1.

3. Procédé selon la revendication 1, caractérisé en ce que $NH_4Cl$ est utilisé en excès pouvant atteindre 20% par rapport à la stoechiométrie de la réaction avec $PCl_5$.

4. Procédé selon l'une quelconque des revendications 1 à 3, caractérisé en ce que $POCl_3$ est utilisé en quantité pondérale représentant 0,5 à 5 fois la quantité pondérale de $PCl_5 + NH_4Cl$.

5. Procédé selon l'une quelconque des revendications 1 à 3, caractérisé en ce que $POCl_3$ est utilisé en quantité pondérale représentant 0,8 à 2 fois la quantité pondérale de $PCl_5 + NH_4Cl$.

6. Procédé selon l'une quelconque des revendications 1 à 5, caractérisé en ce que la quantité de $SO_2$ mise en oeuvre est telle que le rapport molaire $SO_2/PCl_5$ engagé soit d'au moins 2/3.

7. Procédé selon la revendication 5, caractérisé en ce que le rapport molaire $SO_2/PCl_5$ engagé n'excède pas 1,5/1.

8. Procédé selon l'une quelconque des revendications 1 à 7, caractérisé en ce que la température du milieu dans lequel est introduit $SO_2$ est maintenue entre la température de fusion du milieu réactionnel et environ 30°C.

## Patentansprüche

1. Verfahren zur Herstellung von N(Dichlorphosphoryl) trichlorphosphazen ($P_2NOCl_5$) durch Kontaktieren von Phosphorpentachlorid mit Ammoniumchlorid in Gegenwart von $POCl_3$, dadurch gekennzeichnet, daß es aus der Behandlung des nach dieser Reaktion entstandenen und $P_3NCl_{12}$ enthaltenden Milieus mit $SO_2$, Halten dieses Milieus bei einer Temperatur von höchstens etwa gleich 30°C und Abtrennen des Phosphazens $P_2NOCl_5$ besteht.

2. Verfahren nach Anspruch 1, dadurch gekennzeichnet, daß das Molverhältnis $PC1_5/NH_4Cl$ 3/1 ist.

3. Verfahren nach Anspruch 1, dadurch gekennzeichnet, daß das $NH_4Cl$ im Überschuß verwendet wird, der 20%, bezogen auf die Stöchiometrie der Reaktion mit $PCl_5$, erreichen kann.

4. Verfahren nach einem der Ansprüche 1 bis 3, dadurch gekennzeichnet, daß das $POCl_3$ in einer Masse, die das 0,5 bis 5-fache der Masse von $PCl_5 + NH_4Cl$ beträgt, verwendet wird.

5. Verfahren nach einem der Ansprüche 1 bis 3, dadurch gekennzeichnet, daß das $POCl_3$ in einer Masse, die das 0,8 bis 2-fache der Masse von $PCl_5 + NH_4Cl$ beträgt, verwendet wird.

6. Verfahren nach einem der Ansprüche 1 bis 5, dadurch gekennzeichnet, daß $SO_2$ in der Menge eingesetzt wird, daß das Molverhältnis zu eingesetztem $PC_{l5}$ mindestens 2/3 ist.

7. Verfahren nach Anspruch 5, dadurch gekennzeichnet, daß das eingesetzte Molverhältnis von $SO_2/PCl_5$ 1,5/1 nicht übersteigt.

8. Verfahren nach einem der Ansprüche 1 bis 7, dadurch gekennzeichnet, daß die Temperatur des Milieus, in das das $SO_2$ gegeben wird, zwischen der Schmelztemperatur des Reaktionsmilieus und etwa 30°C gehalten wird.

## Claims

1. Process for obtaining N-(dichlorophosphoryl)trichlorophosphazene ($P_2NOCl_5$) by bringing phosphorus pentachloride into contact with ammonium chloride in the presence of $POCl_3$, characterized in that it consists in treating the mixture resulting from this reaction and containing $P_3NCl_{12}$ by means of $SO_2$, the said mixture being maintained at a temperature not exceeding approximately 30°C and in isolating the phosphazene $P_2NOCl_5$.

2. Process according to Claim 1, characterized in that the molar ratio $PCl_5/NH_4Cl$ is 3/1.

3. Process according to Claim 1, characterized in that $NH_4Cl$ is employed in an excess which may be up to 20% relative to the stoichiometry of the reaction with $PCl_5$.

4. Process according to any one of Claims 1 to 3, characterized in that POCl3 is employed in a weight quantity representing 0.5 to 5 times the weight quantity of $PCl_5 + NH_4Cl$

5. Process according to any one of Claims 1 to 3, characterized in that $POCl_3$ is employed in a weight quantity representing 0.8 to 2 times the weight quantity of $PCl_5 + NH_4Cl$.

6. Process according to any one of Claims 1 to 5, characterized in that the quantity of $SO_2$ which is used is such that the molar ratio $SO_2/PCl_5$ brought into action is at least 2/3.

7. Process according to Claim 5, characterized in that the molar ratio $SO_2/PCl_5$ which is brought into action dies not exceed 1.5/1.

8. Process according to any one of Claims 1 to 7, characterized in that the temperature of the mixture into which $SO_2$ is introduced is maintained between the melting temperature of the reaction mixture and approximately 30°C.